Europäisches Patentamt

(19) European Patent Office

Office européen des brevets

(11) Publication number: **0 015 054**
**A1**

(12) # EUROPEAN PATENT APPLICATION

(21) Application number: **80300135.3**

(22) Date of filing: **15.01.80**

(51) Int. Cl.³: **G 06 F 3/04**
**G 06 F 15/06**

(30) Priority: **17.01.79 JP 4408/79**

(43) Date of publication of application:
**03.09.80 Bulletin 80/18**

(84) Designated Contracting States:
**DE FR GB**

(71) Applicant: **FUJITSU FANUC LIMITED**
**5-1, Asahigaoka, 3-chome**
**Hino-shi, Tokyo 191(JP)**

(72) Inventor: **Kurakake, Mitsuo**
**No. 2-16-2, Naito**
**Kokubunji-shi, Toyko(JP)**

(74) Representative: **Bedggood, Guy Stuart et al,**
**Haseltine Lake & Co. Hazlitt House 28 Southampton**
**Buildings Chancery Lane**
**London WC2A 1AT(GB)**

(54) **Bus connection systems.**

(57) A bus connection system in which a central processing
unit (14) is connected to each of a plurality of buses (20, 21) via
respective drivers (15, 17) and receivers (16, 18). Peripheral
circuits (22 to 25) are connected each to one only of the buses
(20, 21). Data can be passed between the central processing
unit (14) and a peripheral circuit (22 to 25) via the appropriate
bus by control of the drivers and receivers (15 to 18) by control
signals (c, d, e, f) from the central processing unit (14).

The central processing unit (14) and the peripheral cir-
cuits are mounted on respective printed circuit boards (19, 22
to 25) and a back panel (26) carrying all of the buses (20, 21)
connects the printed circuit boards.

FIG. 3

EP 0 015 054 A1

-1-
### Bus Connection Systems

This invention relates to bus connection systems providing buses for use in passing data between central processing units and peripheral circuits such as memories, or input/output control circuits.

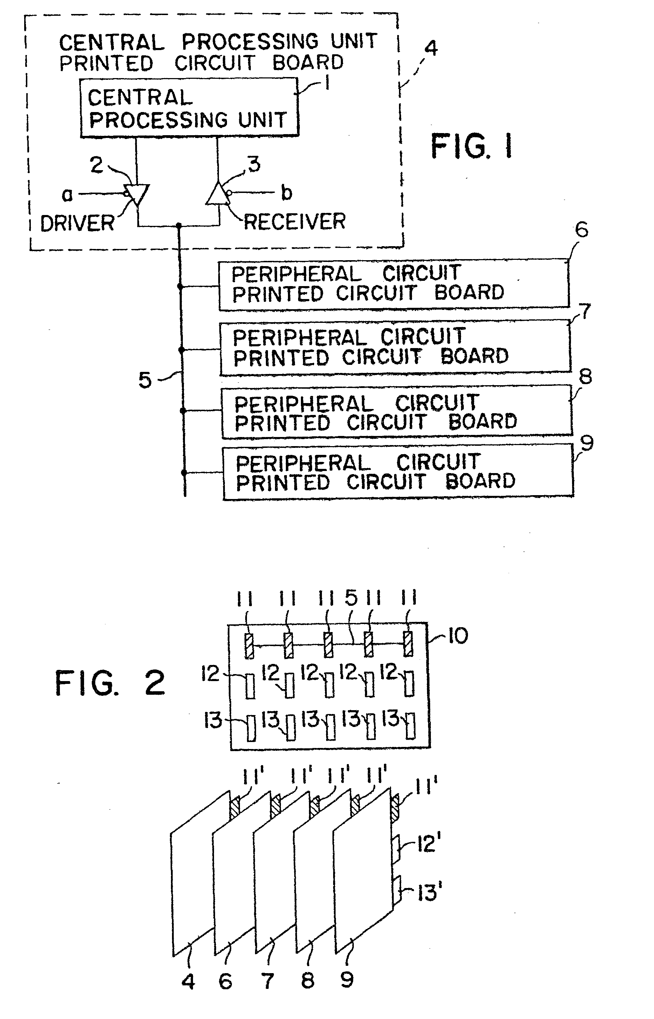

A data processor unit of the type in which a central processing unit printed circuit board and peripheral circuit printed circuit boards carrying, for example, a memory, an input/output control circuit and so forth are connected by means of a back panel usually has an arrangement such as is shown in Fig. 1 of the accompanying drawings, which is a schematic block diagram, for example. Fig. 1 shows a central processing unit 1; a driver 2; a receiver 3; a central processing unit printed circuit board 4; peripheral circuit printed circuit boards 6 to 9; and a bus 5 formed on a back panel. A control signal a for controlling the driver 2 and a control signal b for controlling the receiver 3 are provided from the central processing unit 1 when the central processing unit 1 transmits or receives data.

As illustrated in the schematic diagram of Figure 2 of the accompanying drawings the printed circuit boards 4 and 6 to 9 are interconnected via the bus 5 on the back panel 10 by inserting connecting portions 11', 12' and 13' of the printed circuit boards into connectors 11 and power source connectors 12 and 13 which are connected with the bus 5 on the back panel 10.

-2-

With such a conventional arrangement, however, the number of peripheral circuit printed circuit boards which can be connected to the bus 5 is limited by the number of fan-outs of the driver 2 loaded on the central processing unit printed circuit board 4, increase in delay of signal transmission caused by increase in bus length and throughput of the central processing unit 1.

According to the present invention there is provided a bus connection system in which passage of data between a central processing unit and each of a plurality of peripheral circuits is effected via a bus, characterised in that the central processing unit is connected with each of a plurality of buses via respective drivers and receivers, and wherein the drivers and receivers are controlled by the central processing unit.

A bus connection system embodying the present invention permits connection of a plurality of buses to one central processing unit so as to increase the number of peripheral circuit printed circuit boards connectable with the central processing unit.

Briefly stated, according to the bus connection system of the present invention, in a data processor unit in which data transmission and reception between a central processing unit and a peripheral circuit are effected via a bus, the central processing unit and a plurality of buses are respectively interconnected via drivers and receivers which are controlled by the central processing unit.

Reference is made, by way of example, to the accompanying drawings, in which:-

Fig. 1, as mentioned above, is a schematic block diagram showing the bus connection system of a conventional data processor unit;

Fig. 2, as mentioned above, is a schematic diagram explanatory of the relationships between a back panel and printed circuit boards used in the conventional data processor unit of Fig. 1;

Fig. 3 is a schematic block diagram illustrating

-3-

an embodiment of this invention;

Fig. 4 is schematic diagram illustrating the relationships between a back panel and printed circuit boards utilized in the embodiment of Fig. 3; and

Fig. 5 is a schematic block diagram illustrating another embodiment of this invention.

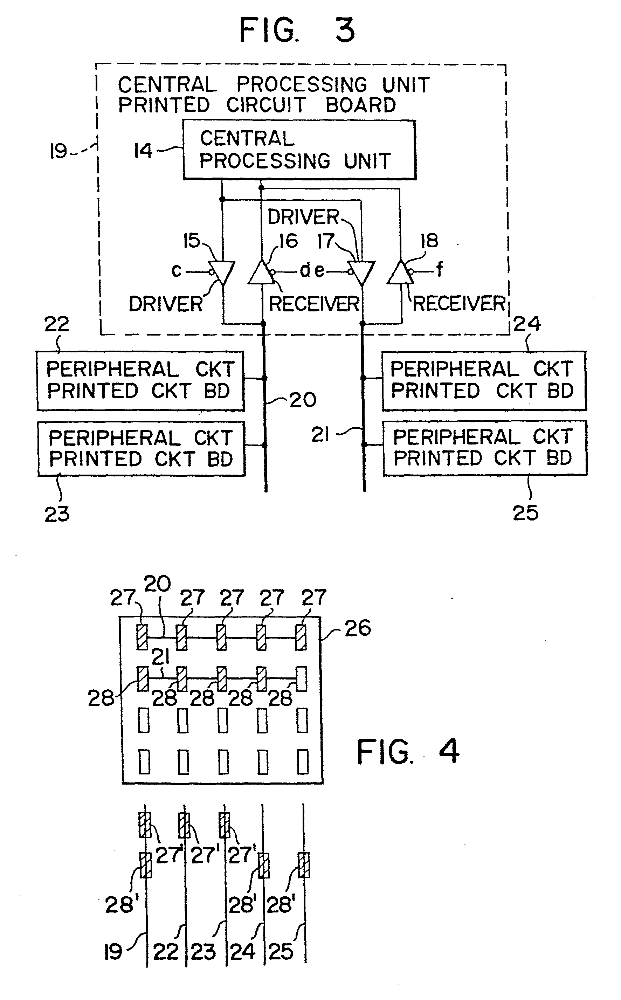

In Fig. 3 there is illustrated in block form an embodiment of this invention, in which two buses are connected to one central processing unit. In Fig. 3, two drivers 15 and 17 and two receivers 16 and 18 are provided for one central processing unit 14 loaded on a central processing unit printed circuit board 19. The driver 15 and the receiver 16 are connected to a bus 20, and the driver 17 and the receiver 18 are connected to a bus 21. To the buses 20 and 21 are connected peripheral circuit printed circuit boards 22 to 25 equipped with memories, input/output control circuits and so forth. The drivers 15 and 17 and the receivers 16 and 18 are controlled by control signals $c$ to $f$ which are provided from the central processing unit 14.

Fig. 4 schematically shows the relationships between a back panel 26, carrying buses 20 and 21, and the printed circuit boards 19 and 22 to 25. To the buses 20 and 21 of the back panel 26 are connected respective pluralities of connectors 27 and 28. The central processing unit printed circuit board 19 is connected via connecting portions 27' and 28' thereof to both of the buses 20 and 21; the peripheral circuit printed circuit boards 22 and 23 are connected via connecting portions 27' thereof to the bus 20; and the peripheral circuit printed circuit boards 24 and 25 are connected via connecting portions 28' thereof to the bus 21.

As described above, the two buses 20 and 21 are connected to one central processing unit 14 and the peripheral circuit printed circuit boards 22 to 25 can be connected to either of the buses 20 and 21; therefore, it is possible to connect to the central processing unit twice as many peripheral circuit printed circuit boards as in the prior art in which only one bus is connected to the central processing unit.

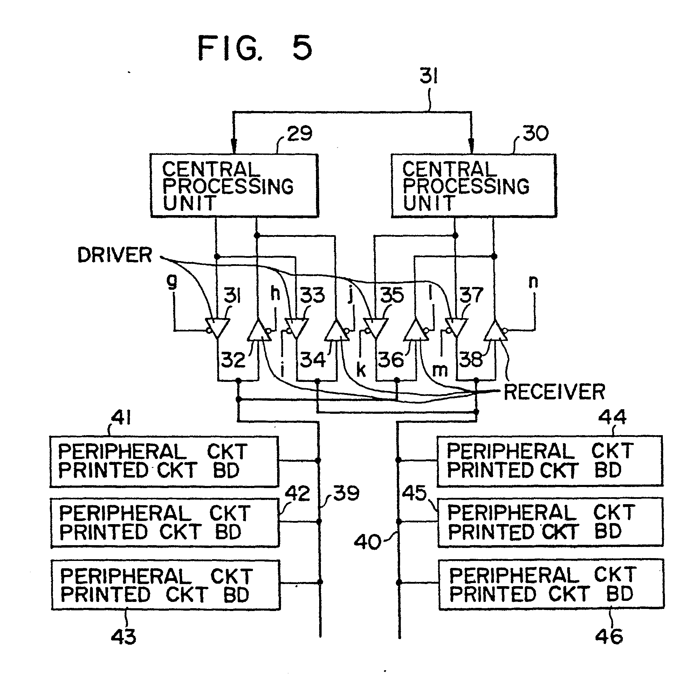

Fig. 5 illustrates in block form another embodiment of this invention, in which two central processing units are employed to provide for increased throughput of a data processor unit. In Fig. 5, two central processing units 29 and 30 are connected to a computer bus 31. Central processing unit 29 is connected to a bus 39 via a driver 31 and a receiver 32 and to a bus 40 via a driver 33 and a receiver 34, whereas the other central processing unit 30 is connected to bus 39 via a driver 35 and a receiver 36 and to bus 40 via a driver 37 and a receiver 38. To the buses 39 and 40 are respectively connected peripheral circuit printed circuit boards 41 to 43 and 44 to 46 and data transmission and reception can take place between the peripheral circuits and the central processing units 29 and 30. Control signals $g$ to $j$ are applied from the central processing unit 29 to the drivers 31 and 33 and the receivers 32 and 34, and control signals $k$ to $n$ are applied from the central processing unit 30 to the drivers 35 and 37 and the receivers 36 and 38. Consequently, the central processing units 29 and 30 are capable of sharing the buses 39 and 40. If the driver 35 and the receiver 36 are left out, then only the one central processing unit 29 is connected to both the buses 39 and 40 and the other central processing unit 30 is connected to only the one bus 40. The central processing unit printed circuit board may be formed to carry both of the two central processing units 29 and 30, the drivers 31, 33, 35 and 37 and the receivers 32, 34, 36 and 38; but the central processing unit 29, the drivers 31 and 33 and the receivers 32 and 34 may be loaded onto a printed circuit board separate from a printed circuit board on which the central processing unit 30, the drivers 35 and 37 and the receivers 36 and 38 are loaded.

As has been described in the foregoing in an

-5-

embodiment of this invention, a plurality of buses are connected to a central processing unit via pluralities of drivers and receivers which are controlled in operation by control signals from the central processing unit. Since peripheral circuit printed circuit boards of the same number as those in the prior art can be connected to each of the buses, it is possible to increase the number of peripheral circuit printed boards that can be connected to one central processing unit.

Accordingly, it is easier to construct a large capacity, external memory using a number of inexpensive printed circuit boards carrying small capacity memories; this leads to the advantage that the function of a data processor unit can be enlarged economically.

Thus there is provided a bus connection system in which data transmission and reception between a central processing unit and a memory, an input/output control circuit or like peripheral circuit is performed via a bus. A plurality of buses are each connected to the central processing unit via a driver and a receiver, and the driver and the receiver are controlled by the central processing unit.

CLAIMS

1.  A bus connection system in which passage of
data between a central processing unit and each of a
plurality of peripheral circuits is effected via a bus,
characterised in that the central processing unit
is connected with each of a plurality of buses via
respective drivers and receivers, and wherein the drivers
and receivers are controlled by the central processing
unit.

2.  A bus connection system according to claim 1,
wherein at least one of the plurality of buses is
connected to a plurality of central processing units
via drivers and receivers.

3.  A bus connection system according to claim 1,
wherein the central processing unit, the drivers and
the receivers are provided on   one printed circuit
board.

4.  A bus connection system according any preceding
claim, wherein at least one of the peripheral circuits
is an input/output control circuit.

5.  A bus connection system according to any preceding
claim, wherein at least one of the peripheral
circuits is an external memory.

6.  A bus connection system according to claim 5,
wherein the peripheral circuits comprise a plurality of
external memories each of which is a low capacity
memory loaded on a printed circuit board.

7.  A bus connection system according to claim 1,
comprising a back panel for mounting a plurality of
printed circuit boards respectively carrying the central
processing unit and peripheral circuits, the back
panel having a plurality of buses formed thereon with
connectors for receiving the printed circuit boards,
wherein the printed circuit board carrying the central
processing unit, when mounted on the back panel, is
connected for the passage of data along each of the buses,
and wherein each printed circuit board carrying a
peripheral circuit, when mounted on the back panel, is

-7-

connected for the passage of data along a selected
bus only.

$\frac{1}{3}$

CENTRAL PROCESSING UNIT
PRINTED CIRCUIT BOARD

CENTRAL PROCESSING UNIT — 1

4

2 / DRIVER   a

3   b RECEIVER

FIG. 1

5

PERIPHERAL CIRCUIT PRINTED CIRCUIT BOARD — 6

PERIPHERAL CIRCUIT PRINTED CIRCUIT BOARD — 7

PERIPHERAL CIRCUIT PRINTED CIRCUIT BOARD — 8

PERIPHERAL CIRCUIT PRINTED CIRCUIT BOARD — 9

FIG. 2

11  11  11  5 11  11

10

12  12  12  12  12

13  13  13  13  13

11'  11'  11'  11'  11'

12'

13'

4  6  7  8  9

# FIG. 3

CENTRAL PROCESSING UNIT
PRINTED CIRCUIT BOARD

19

14 CENTRAL
PROCESSING UNIT

DRIVER

15 16 17 18

c — DRIVER   d e — RECEIVER   f — RECEIVER

22   24

PERIPHERAL CKT
PRINTED CKT BD   PERIPHERAL CKT
PRINTED CKT BD

20

PERIPHERAL CKT
PRINTED CKT BD   21   PERIPHERAL CKT
PRINTED CKT BD

23   25

# FIG. 4

27 20 27 27 27 27

26

21

28 28 28 28 28

27' 27' 27'

28'   28' 28'

19   22   23   24   25

# FIG. 5

## EUROPEAN SEARCH REPORT

Application number

EP 80 30 0135

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| | US - A - 4 034 346 (HONEYWELL) <br> * Column 2, lines 20-30; column 3, lines 15-68; column 4, lines 7-44; figures 1,2 * <br> -- | 1,5 | G 06 F 3/04 <br> 15/06 |
| | ELEKTRIE, vol. 32, no. 12, December 1978, pages 636-639 <br> Berlin, DD. <br> GIEBLER: "Mikroprozessoren, Mikroprozessrechner und Mikroprozessrechnersysteme" <br> * Page 636, column 2, lines 7-24, 28-34; figure 1; page 637, column 1, lines 1,2,7-9; figure 3; page 638, column 1, lines 8-17 * <br> -- | 1,3-7 | TECHNICAL FIELDS SEARCHED (Int.Cl. ³) <br><br> G 06 F 3/04 <br> 15/06 <br> H 03 K 19/00 <br> G 06 G 7/02 <br> 7/04 <br> 7/06 |
| | US - A - 4 042 832 (HONEYWELL) <br> * Column 1, lines 14-19; column 2, lines 3-25, 52-59; figure 1 * <br> -- | 1,3-5, 7 | |
| A | GB - A - 1 533 576 (COMPUTER TECHNOLOGY) <br> * Page 1, lines 26-39, 62-69; page 2, lines 91-129; page 3, lines 1-31, 46-54; figures 1,2 * <br> ---- | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X  The present search report has been drawn up for all claims

| Place of search | Date of completion of the search | Examiner |
|---|---|---|
| The Hague | 09-04-1980 | DHEERE |

EPO Form 1503.1 06.78